# EUROPEAN PATENT APPLICATION

(11) **EP 2 169 607 A1**
(43) Date of publication of application: **31.03.2010**
(21) Application number: 09252300.0
(22) Date of filing: 29.09.2009
(51) Int. Cl.: G06Q 10/00, G06Q 40/00

(54) **Communication systems and methods**

(30) Priority: 29.09.2008 US 101037 P
(71) Applicant: RouteOne LLC, Farmington Hills, MI 48334 (US)
(72) Inventor: Jurecki, Michael, Grosse Isle, Michigan 48138 (US); Siebert, Richard, Cranberry Township, PA 16066 (US); Crossman, James, Farmington Hills Michigan 48334 (US)
(74) Representative: Lloyd, Patrick Alexander Desmond

(57) **Abstract**

Systems and methods for communicating a financing application from a retailer to a finance source are provided. In some embodiments, information related to a financing application may be communicated from a retailer. The information may be converted to a suitable file format and automatically transmitted, for example, as a facsimile (or any other suitable file format) over communications paths using a communications network. In some embodiments of the present invention, motor vehicle dealership financing application techniques are used to determine financing eligibility, financing terms, or any combination thereof in connection with the sale or leasing of motor vehicles.

## Description

### Field of the Invention

The present invention relates to communication systems and methods, and more particularly, the present invention relates to automated systems and methods for communicating a financing application from a retailer to a finance source.

### Background of the Invention

Communication between entities is often complicated by the fact that they rely on incompatible communication systems. For example, in the context of a car dealership, when a customer chooses to finance the purchase of a vehicle, the dealership must communicate information to a selected finance source. Because each finance source may use a communication system different from the others and different from the dealership, the dealer must determine what kind of communication system each finance source uses and then convert the information into the requisite format. In some cases, the dealership must manually transmit the information over a communication network, or even verbally over the telephone. Similarly, the finance source must rely on limited communication techniques in order to communicate its decision and terms back to the dealership.

Accordingly, it would be desirable to provide improved communication systems and methods to address these limitations.

### Summary of the Invention

In view of the foregoing, systems and methods are provided for automatically communicating a financing application from a retailer to a finance source. The invention is defined by the amended claims to which reference should be made.

In some embodiments of the present invention, information related to a financing application may be electronically received in a first format over a computer network at a central processor. The information may be communicated from a retailer to the computer network.
The information may be electronically processed at the central processor to automatically convert the information about the request to a second format. At least a subset of the information in the second format may be electronically communicated to a finance source over the computer network. A response from the finance source to the information related to the financing application may be electronically received at the central processor, and the response may be communicated electronically to the retailer.

### Brief Description of the Drawings

The above and other objects and advantages of the invention will be apparent upon consideration of the following detailed description, taken in conjunction with the accompanying drawing, in which like reference characters refer to like parts throughout, and in which:

FIG. 1 shows a block diagram of an illustrate system in accordance with an embodiment of the present invention; and

FIG. 2 shows an illustrative flow diagram for communicating information among a plurality of entities in accordance with an embodiment of the present invention.

### Detailed Description of the Invention

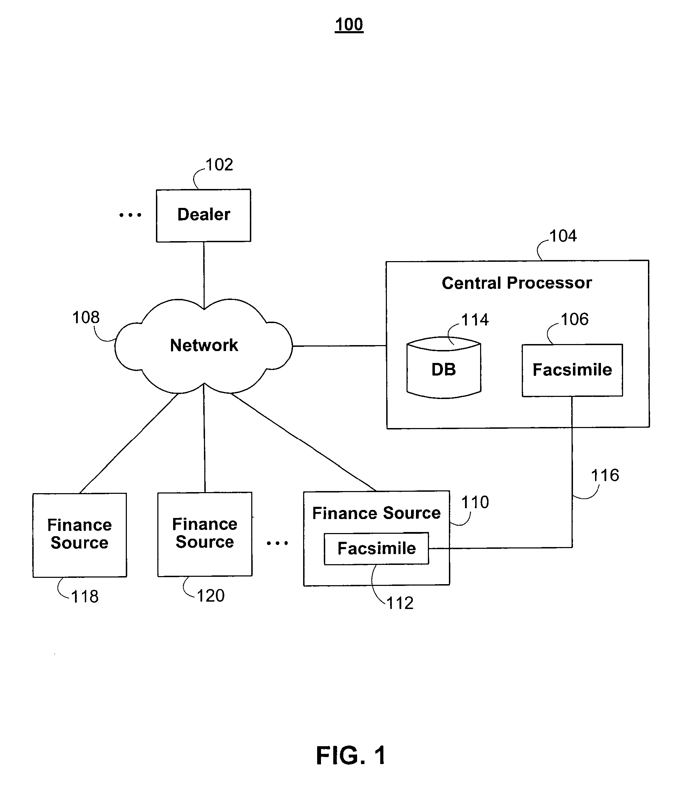

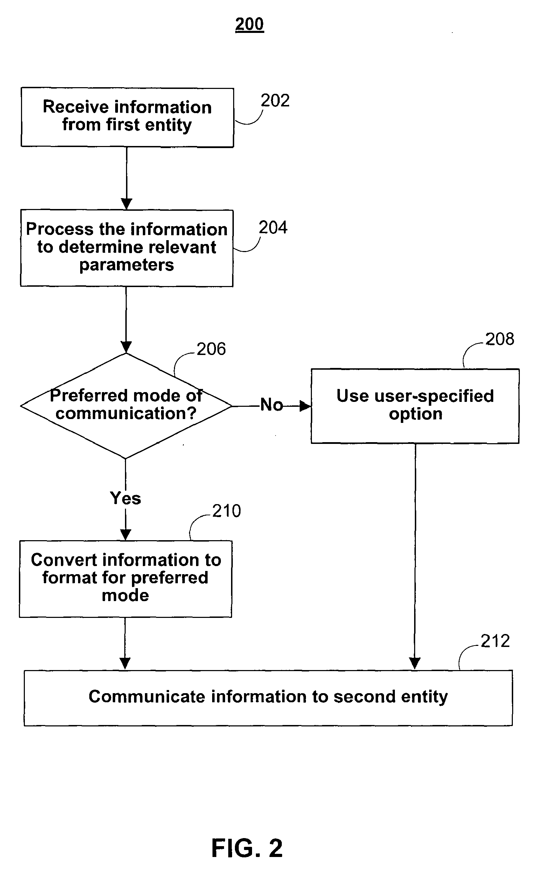

Systems and methods are provided for communicating information between entities related to, for example, credit applications, and are described below with reference to FIGS. 1 and 2.

For purposes of brevity and clarity, and not by way of limitation, the present invention is described herein in the context of a motor vehicle dealership financing application technique that is used to determine financing eligibility, financing terms, or any combination thereof in connection with the sale or leasing of motor vehicles. For example, FIG. 1 is a block diagram of an illustrative system 100 that may be used to implement the features of the present invention. System 100 may include one or more motor vehicle dealerships 102. Motor vehicle dealership 102 may include one or more computers or terminals (e.g., dumb terminals) for entering information about a purchaser or lessee and a desired vehicle to be purchased or leased. For example, each of such computers or terminals may include a web browser or any other type of network interface into which a dealer may fill in fields with the requisite information using for example a JAVA^{®} applet, an HTML-based web page, any other suitable interface, or any combination thereof.

Dealership 102 may be communicatively coupled to central processor 104. Central processor 104 may be any suitable hardware, software, or both, located remote to dealership 102, or within dealership 102 (or in the case of multiple dealerships within all or some of the dealerships). Central processor 104 may include database 114 and communications sub-system 106.
Database 118 may be used to store information about vehicle purchasers and lessees, vehicle information, financing provider information, any other suitable information, or any combination thereof. Communications sub-system 106 may be any suitable software, hardware, or both, to facilitate communications with one or more finance sources 110, 118, and 120. For example, as illustrated, communications sub-system 106 may include a facsimile device. Other suitable communications sub-system 106 components may include one or more of the following: a modem, network router, a computer or terminal with network access (e.g., for sending electronic mail over the Internet), wired or wireless telephone equipment, any other suitable communications equipment, or any combination thereof.

Dealership 102 may be coupled to central processor 104 using any suitable network 108. For example, network 108 may be a private data network, a public data network (such as the Internet), or a combination of both. Dealership 102 may be coupled to network 108 using any suitable wired or wireless communications paths. Finance source 110 may be coupled to central processor 104 using any suitable network 108, a communications path 116, or both. For example, network 108 may be a private data network, a public data network (such as the Internet), or a combination of both. Communications path 116 may be a public telephone network, a private telephone network, or a combination of both. Finance sources 110, 118, and 120 may be coupled to network 108 using any suitable wired or wireless communications paths. In one suitable arrangement, dealership 102 may be coupled to central processor 104 using a different network from that which couples finance sources 110, 118, and 120 to central processor 104. Individual finance sources 110, 118, and 120 may be coupled to central processor 104 using different networks, communication paths, or both, from one another.

In some suitable embodiments, a dealer at dealership 102 may access central processor 104 from a terminal or computer using, for example, a web browser to communicate with central processor 104 over network 108 (e.g., the Internet). For example, when a customer at dealership 102 desires to lease or finance the purchase of a vehicle, the dealer may input a credit application containing customer information, vehicle information, a desired finance source, any other suitable information, or any combination thereof to central processor 104. Central processor 104 may process this information and communicate with the desired finance source to obtain financing eligibility, terms, conditions, incentives, any other suitable information, or any combination thereof from the desired finance source. This information may then be communicated to the dealer.

In some embodiments of the present invention, central processor 104 may communicate the credit application (or relevant information derived therefrom) to a desired finance source using any one or more suitable communication techniques. For example, central processor 104 may transmit the credit application to one of finance sources 118 and 120 using network 108. In one embodiment, central processor 104 may communicate with finance sources 118 and 120 over network 108 using XML or any other suitable interface or protocol. A credit application received by finance source 118 or 120 may be automatically processed using software and hardware at the finance source. Financing decisions, terms, conditions, incentives, and any other suitable information may then be automatically communicated back to central processor 104 over network 108, using for example, XML.

In another suitable approach, central processor 104 may send the credit application to a finance source such as finance source 110 as a facsimile using communications sub-system 106. Finance source 110 may receive the facsimile using its communications sub-system 112. The facsimile may be sent from central processor 104 either manually (e.g., by printing out a hard copy and having personnel scan the hard copy using facsimile equipment) or using an automated process in which the credit application is automatically processed at central processor 104, converted to a suitable file format and automatically transmitted as a facsimile over communications path 116 using communications sub-system 106. In this case, communications sub-system 106 may be a modem or facsimile equipment coupled to a server at central processor 104 that receives the credit application from dealership 102. The modem or facsimile equipment may access communications path 116 and transmit the credit application to communications sub-system 112 at finance source 110. Communications sub-system 112 may include a modem or facsimile equipment coupled to a server that communicates with communications sub-system 106 to receive the credit application and allows it to be accessed and viewed or printed into hard-copy form by personnel at finance source 110.

In another suitable approach, the credit application or relevant information derived from the credit information may be communicated by central processor 104 to finance source 110 over a network, system, or both, that is separate and distinct to the network, system, or both, used by dealership 102 and central processor 104 to communicate credit application information. For example, communications sub-system 106 may generate an electronic mail containing the credit application information that may then be communicated to finance source 110 as a conventional electronic mail over the Internet.

When the credit application or relevant information derived from the credit application by central processor 104 is received at finance source 110 (either in hard-copy or electronically), personnel at finance source 110 may either manually process the information or input the credit application information into a system in order to determine whether the customer qualifies for financing, terms and conditions for financing, incentives, any other suitable determination, or any combination thereof.

After the determinations have been made, personnel at finance source 110 may be given the ability to access central processor 104 using network 108 by, for example, providing an appropriate web page (e.g., using HTML, JAVA^{®} applets, XML, etc.) over the Internet, which is accessible with suitable credentials (e.g., user identification and password). The personnel may be given the ability to enter the determinations that were made with respect to the credit application using this interface. Central processor 104 may then, in turn, report back to dealership 102 with the determinations using network 108.

In some embodiments of the present invention, central processor 104 may determine the mode of communication of a credit application to a desired finance source. For example, central processor 104 may look up the mode of communication for a particular finance source to which a credit application is to be communicated (e.g., using a look-up table stored in database 114). Alternatively or in addition, the credit application communicated to central processor 104 by a dealership 102 may specify a mode of communication to a desired finance source. After determining of the mode of communication for a particular finance source, central processor 104 may communicate the credit application to the target finance source using the determined mode of communication.

The process of requesting and retrieving the determinations from one of finance sources 110, 118, and 120 by central processor 104 may be transparent to the dealer and customer at dealership 102. This transparency may be implemented regardless of the mode of communication being used between central processor 104 and one of finance sources 110, 118, and 120. This transparency may be implemented regardless with which finance source central processor 104 is communicating.

FIG. 2 shows an illustrative flow diagram for communicating information from a first entity to a second entity in accordance with an embodiment of the present invention. In some embodiments, the first entity may be a retailer (e.g., a motor vehicle dealer) and the second entity may be a finance source. At step 202, central processor 104 may receive a credit application or any other suitable information to be used in securing financing for a customer at a dealership. At step 204, central processor 104 may process the received information to determine relevant parameters. Relevant parameters may be any one or more parameters that may be used by central processor 104 to determine the mode of communication of a credit application to a desired finance source. For example, a suitable parameter may be the finance source or finance sources to which the credit application is being sent.

If, at step 206, central processor 104 determines that the credit application is not subject to a preferred mode of communication, then central processor 104 may communicate the credit application to the finance source specified in the credit application and not perform format conversion (step 208). For example, the credit application communicated to central processor 104 by a dealership 102 may specify a mode of communication to a desired finance source. If, at step 206, central processor 104 determines that the credit application is subject to a preferred mode of communication, then central processor 104 may convert the credit application to a format for the preferred mode at step 208. For example, as discussed above, central processor 104 may look up the mode of communication for a particular finance source to which a credit application is to be communicated (e.g., using a look-up table stored in database 114). At step 212, after determining if there is a preferred mode of communication for a particular finance source, central processor 104 may communicate the credit application to the target finance source using the determined mode of communication.

It should be understood that the steps of flow diagram 200 are merely illustrative. Any of the steps of flow diagram 200 may be modified, omitted, or rearranged, two or more of the steps may be combined, or any additional steps may be added, without departing from the scope of the present invention.

A computer readable storage medium may tangibly embody a program, functions, and/or instructions that may cause system 100 to operate in a specific and predefined manner as described herein. Those skilled in the art will appreciate, however, that the systems and methods described herein may be implemented at any level, ranging from hardware to software including, but not limited to, firmware, resident software, and microcode.

It will be understood that the present invention may be practiced in any suitable context. The motor vehicle dealership and finance source context discussed above is merely illustrative. Communication between entities involved in a business transaction in accordance with the present invention may be applied to any suitable credit context, such as home loan applications, student loan applications, business loan applications, or any other suitable credit context. Communication between entities involved in a business transaction in accordance with the present invention may be applied to any other suitable field such as bid selection (e.g., construction contracts) or to any context in which a determination is made by a third-party entity, which is then communicated back to an original entity making a request for the determination.

It will be understood that the foregoing is only illustrative of the principles of the invention, and that various modifications may be made by those skilled in the art without departing from the scope and spirit of the invention. Those skilled in the art will appreciate that the invention may be practiced by other than the described embodiments, which are presented for purposes of illustration rather than of limitation, and the invention is limited only by the claims that follow.

## Claims

1. A method for communicating a financing application from a retailer to a finance source, the method comprising:
electronically receiving, over a computer network at a central processor, information related to the financing application in a first format, wherein the information is communicated from the retailer to the computer network;
at the central processor, electronically processing the information to automatically convert the information to a second format;
electronically communicating at least a subset of the information in the second format to the finance source over the computer network;
electronically receiving, at the central processor, a response from the finance source to the information related to the financing application; and
electronically communicating the response to the retailer.

2. The method defined in claim 1, further comprising:
at the central processor, determining a mode of communication of the information for communication to the finance source, wherein the information is converted to the second format based on the determined mode of communication.

3. The method defined in claim 2 wherein the retailer specifies the mode of communication of the information to the finance source.

4. The method defined in claim 2 wherein the mode of communication is stored in a database at the central processor.

5. The method defined in claim 2 wherein the response is electronically communicated to the retailer using the determined mode of communication.

6. The method defined in claim 1 wherein the central processor is either located remotely from the retailer and the finance source or at the retailer.

7. The method defined in claim 1 wherein the information is communicated electronically using XML or by facsimile.

8. A system for communicating a financing application from a retailer to a finance source, the system comprising:
a computer network;
a central processor coupled to the computer network and configured to:
receive, over the computer network, information related to the financing application in a first format, wherein the information is communicated from the retailer to the computer network;
process the information to automatically convert the information to a second format;
communicate at least a subset of the information in the second format to the finance source over the computer network;
receive a response from the finance source to the information related to the financing application; and
automatically communicate the response to the retailer.

9. The system defined in claim 8 wherein the central processor is further configured to:
determine a mode of communication of the information for communication to the finance source, wherein the information is converted to the second format based on the determined mode of communication.

10. The system defined in claim 9 wherein the retailer specifies the mode of communication of the information to the finance source.

11. The system defined in claim 9 wherein the mode of communication is stored in a database at the central processor.

12. The system defined in claim 9 wherein the response is communicated to the retailer using the determined mode of communication.

13. The system defined in claim 8 wherein the central processor is either located remotely from the retailer and the finance source.

14. The system defined in claim 8 wherein the information is communicated electronically using XML or by facsimile.

15. Computer-readable medium for communicating a financing application from a retailer to a finance source, the computer-readable medium comprising program logic recorded thereon for performing the steps of any of claims 1 to 7.
